# EUROPEAN PATENT APPLICATION

(11) **EP 4 700 939 A2**
(43) Date of publication of application: **25.02.2026**
(21) Application number: 25176524.4
(22) Date of filing: 14.05.2025
(51) Int. Cl.: H01M 50/216, E05B 67/22

(54) **ENGAGEMENT MECHANISM FOR DISK DEVICE, METHOD OF ENGAGING DISK DEVICE WITH ELECTRICAL CONTACTS, AND ELECTRONIC LOCK HAVING SAME**

(30) Priority: 28.06.2024 US 202418759233
(71) Applicant: Dormakaba USA Inc., Indianapolis, Indiana 46250 (US)
(72) Inventor: BACON-BROWN, James David, Lexington KY, 40502 (US); CRAYCRAFT, Brian, Lexington KY, 40511 (US)
(74) Representative: Balder IP Law, S.L.

(57) **Abstract**

The engagement mechanism can have a receptor having an entrance opening, a cavity extending longitudinally from the entrance opening between a first guide wall and a second guide wall, and electrical contacts in the cavity; a guide slot held in a fixed position and orientation relative the receptor, adjacent the entrance opening, the guide slot extending transversally; and a holder having a support operable to receive the disk device and a pivot engaged with the guide slot, the pivot operable to slide transversally along the guide slot, and to rotate within the guide slot, the support being selectively movable, via said sliding and rotating of the pivot in the guide slot, across the entrance opening, between an engaged configuration in which the support is inside the cavity with the disk device connected to the electrical contacts, and an exposed configuration.

## Description

### TECHNICAL FIELD

This specification generally relates to electronic locks such as may be used in association with access control devices such a door of a safe or premise, and more specifically to an engagement mechanism for a disk device such as a coin cell battery.

### BACKGROUND

Electrically powered locks have become more popular over recent years due to factors such as conveniences which electronic access procedures may have over the mechanical access afforded by physical keys, the ability to maintain electronic records of when the lock has been activated, and/or the ability to program a schedule of time periods during which the lock may be accessed and of time periods during which the lock may not be accessed (e.g., to prevent access during weekends or nights).

Electronic locks may control physical access to premises based on a computerized authorization check. Different locks can have different ways of performing the authorization check, which typically involve comparing access credentials received via an input interface with access data made accessible to a processor of the electronic lock. Access credentials may be encoded in a keycard or in an electronic user device (e.g., smartphone), and associated input interfaces may include an antenna for instance. Access credentials may also be communicated via a user code known by a user, and the input interface which can receive the user code from the user may include a keypad. By contrast, in the case of mechanical locks, the access credentials are encoded in the geometrical shape of the physical key. Some electronic locks can have more than one means of inputting the access credentials, such as being adapted to receive an input either from a keycard, electronic device, from a manually entered PIN, and/or via a physical key.

The electronic lock mechanically controls the access to the premises based on whether the authorization check results in a success or failure. For instance, the lock's computer can control an actuator to retract a deadbolt, or unblock the movement of a handle and/or latch bolt, contingent upon a success of the authorization check.

In some cases, electronic locks are connected to an external energy source, such as a municipal electricity network accessed via the building's electrical system. In other cases, electronic locks are connected to an internal energy source, such as a battery pack or generator which may allow a user to generate electrical power by turning a dial or handle. Some electronic locks may be connected to both an external and an internal energy source. When electronic locks are powered by an internal energy source, and especially in cases where the electronic lock does not have access to an external energy source, there can be a particular challenge in meeting functionality requests in a way which allows the energy consumption of the lock to remain sufficiently low for the energy source to last for a sufficient amount of time. Indeed, it can be preferred to use batteries as the energy source, for instance, and one requirement of the lock may be that the batteries last a sufficient amount of time for the inconvenience imposed to the user by the need to change the batteries to be relatively infrequent (e.g., less than once a year) and thus an acceptable trade-off for the level of functionality. Some locks can have more than one energy source. For instance, some locks may have a main energy source powering the locking/unlocking functionality of the lock, and a backup energy source offering backup power to an auxiliary functionality, such as an electronic record-keeping functionality, an electronic schedule functionality, and/or to keep a real-time clock powered up and running, in the event where the main energy source becomes unavailable (e.g., when the batteries run out of power or are replaced). In some embodiments, the backup energy source may be the sole source of power for such auxiliary functionalities.

Several other considerations affect the design of electronic locks, including security, reliability (occurrences of users being locked out due to malfunction of the lock may be particularly undesirable), maintenance-related considerations, cost, convenience, and giving users an overall impression of quality when interfacing with the lock. While previously existing electronic locks were satisfactory to a certain degree, there always remains room for improvement.

### SUMMARY

Some electronic disk devices, such as coin cell batteries (also known as button cells) or 1-wire devices (also known as Dallas keys or as iButtons) are intended to be connected with electrical contacts which are recessed in a cavity formed by a receptor during use. The receptor may be housed in a housing of a larger electronic device, such as an electronic lock for instance. It was found that in many cases, it was preferable, for reasons such as cost, reliability and making more space available for other components, to use a receptor which had a limited volume (footprint) and/or which was otherwise standard/off-the-shelf. The engagement of the disk device can be managed by an engagement mechanism in the form of a drawer-type holder. A drawer-type holder can have the advantage of satisfying the need for a limited footprint since the drawer-type holder can be sized in a manner to fit snugly between two guide walls delimiting a transversal cavity width of the receptor. On the other hand, a drawer-type holder can have the disadvantage of being dropped, misplaced and/or lost by the user, who may no longer be able to use the larger electronic device unless a replacement holder is found. There can therefore be an advantage of an engagement mechanism where the holder remains tethered to the receptor when in the exposed configuration, allowing to load, remove or replace the disk device without risking loss of the holder.

In one example, one may choose to use a pivoting holder rather than a translating, e.g. drawer type, holder. Such a pivoting holder may always remain attached to the receptor, independently of whether it is in the engaged or exposed configuration. However, with a pivoting holder, the engagement path is arc shaped, and the receptor should thus be configured in a way to accommodate with arcuate travel of the holder. This can lead to a receptor that has a larger footprint and/or a need for using a customized receptor as opposed to an off-the-shelf receptor.

In some embodiments, such inconveniences may be overcome by using a holder which has a pivot which is mounted to a transversally-oriented guide slot disposed adjacent the entrance opening of the cavity. In this manner, the holder can be pivoted into the exposed configuration while remaining tethered to the receptor, while still being engageable longitudinally into a linear cavity of a drawer type receptor. More specifically, the combined action of the translational and rotational movement of the holder's pivot in the guide slot combined by a somewhat circular geometry of the disk device support, can allow the support to rotate, to a certain extent, while it is moved longitudinally into the cavity, allowing to simultaneously retain the advantages of a drawer-type (translational) engagement path. Accordingly, a nearly-straight engagement path can be offered both for the insertion and for removal of the holder.

In accordance with one aspect, there is provided an engagement mechanism for a disk device, the engagement mechanism comprising: a receptor having an entrance opening, a cavity extending longitudinally from the entrance opening between a first guide wall and a second guide wall, and electrical contacts in the cavity; a guide slot held in a fixed position and orientation relative the receptor, adjacent the entrance opening, the guide slot extending transversally; and a holder having a support operable to receive the disk device and a pivot engaged with the guide slot, the pivot operable to slide transversally along the guide slot, and to rotate within the guide slot, the support being selectively movable, via said sliding and rotating of the pivot in the guide slot, across the entrance opening, between an engaged configuration in which the support is inside the cavity with the disk device connected to the electrical contacts, and an exposed configuration in which the support is outside the cavity while remaining tethered to the receptor via the pivot and guide slot engagement.

It may be provided that the disk device has a disk axis, the support is operable to trap the disk device in the orientation of the disk axis, and the pivot has a pivot axis parallel to disk axis.

It may be provided that the support is flat and generally circularly shaped around the disk device.

It may be provided that a pivot arm protrudes from the support to an end, wherein the pivot is provided at the end of the pivot arm.

It may be provided that a fastener arm protrudes from the support opposite the pivot arm, the fastener arm bearing a catch.

It may be provided that the receptor and guide slot are made integral to a housing, the housing having an edge, wherein the catch is operable to flex and snappingly engage with the edge when the holder is moved to the engaged configuration.

It may be provided that the catch is exposed across an aperture when snappingly engaged with the edge.

It may be provided that a wire, length of string or other form of tether is tied to the fastener arm and exposed to a user when the catch is snappingly engaged with the edge.

It may be provided that the pivot arm and the fastener arm protrude from a proximal portion of the support, further comprising a moulding protrusion protruding from a distal portion of the support, opposite the proximal portion.

It may be provided that the fastener arm is flat in a longitudinally and transversally oriented plane.

In accordance with another aspect, there is provided a method of engaging a disk device with electrical contacts, the method comprising: positioning the disk device in a support of a holder when the holder is in an exposed configuration; moving the holder with the supported disk device from the exposed configuration to an engaged configuration, including engaging the support with an entrance opening of a receptor and moving the support longitudinally across the entrance opening, into a cavity of the receptor, while simultaneously pivoting the holder and sliding the holder, until the disk device in the support is engaged with the electrical contacts.

It may be provided that said moving the support longitudinally includes a longitudinally-oriented guide wall delimiting a transversal side of the cavity guiding the longitudinal movement of the support.

It may be provided that said guiding the longitudinal movement of the support includes the longitudinally-oriented guide wall sliding against a first curved surface of the support on a first side of the disk device.

It may be provided that said simultaneously pivoting and sliding the holder includes guiding a pivot of the holder in a transversally-oriented linear slot located transversally adjacent the entrance opening, and moving the pivot towards the entrance opening.

It may be provided that said moving the holder further includes snappingly engaging the holder into the engaged configuration, and said moving the support longitudinally is further performed until the holder is snappingly engaged in the engaged configuration.

It may be provided that the method further include disengaging the snapping engagement of the holder and retracting the support from the cavity across the entrance opening.

It may be provided that the method further include moving the holder from the engaged configuration to the exposed configuration, including moving the support longitudinally across the entrance opening, out from the cavity while simultaneously pivoting the holder relative a pivot engaged with a slot and sliding the pivot transversally away from the entrance opening within the slot, until the disk device in the support is fully exposed outside the cavity.

It may be provided that said moving the support longitudinally across the entrance opening, out from the cavity, includes a curved surface of the support on a side of the disk device sliding against a longitudinally-oriented guide wall disposed along a side of the cavity proximate the slot.

It may be provided that the method further include removing the disk device from the support, positioning an other disk device in the support, and repeating the step of moving the holder.

In accordance with another aspect, there is provided an electronic lock having a movable bolt, a clock, a computer controlling the opening and closing of the movable bolt based on authentication of a user input, a coin cell battery powering the clock, and a replacement mechanism for the coin cell battery, the replacement mechanism having : a receptor having an entrance opening, a cavity extending longitudinally from the entrance opening between a first guide and a second guide, and electrical contacts in the cavity; a guide slot held in a fixed position and orientation relative the receptor, the guide slot extending transversally and positioned adjacent the entrance opening; and a holder having a support operable to receive the coin cell battery and a pivot engaged with the guide slot, the pivot operable to slide transversally along the guide slot, and to rotate within the guide slot, the support being selectively movable, via said sliding and rotating of the pivot in the guide slot, across the entrance opening, between an engaged configuration in which the support is inside the cavity with the coin cell battery connected to the electrical contacts, and an exposed configuration in which the support is outside the cavity while remaining tethered to the receptor via the pivot and guide slot engagement.

All technical implementation details and advantages described with respect to a particular aspect of the present invention are self-evidently mutatis mutandis applicable for all other aspects of the present invention.

Many further features and combinations thereof concerning the present improvements will appear to those skilled in the art following a reading of the instant disclosure.

### DESCRIPTION OF THE FIGURES

In the figures,
Fig. 1 is a view of an example of a safe having an electronic lock;
Fig. 2 is a view of a rear side of a door of the safe of Fig. 1, showing a housing of the electronic lock;
Fig. 3A and 3B are oblique views of the housing of the electronic lock, with Fig. 3A showing an engagement mechanism in an engaged configuration, and Fig. 3B showing an engagement mechanism in an exposed configuration;
Fig. 4 is an oblique view of internal components of the electronic lock, enlarged and fragmented;
Figs 5A to 5D are schematic views showing points at which a holder is moved along an engagement path and along a disengagement path relative a receptor;
Fig. 6 is an oblique view of the holder of the engagement mechanism; and
Fig. 7 is a cross-sectional view taken along lines 7-7 of Fig. 3A.

### DETAILED DESCRIPTION

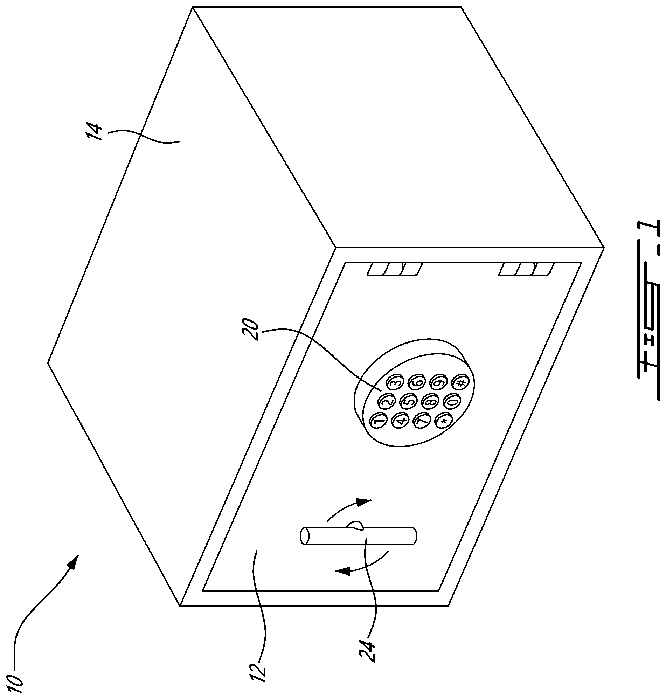

Fig. 1 shows an example of an example of an access control device 10 including, in this embodiment, a door 12 and chamber 14 of a safe. The safe can have a chamber 14 having an internal cavity, an opening leading to the internal cavity. The safe can have a door 12 configured to selectively free and obstruct the opening, allowing or preventing access to the cavity.

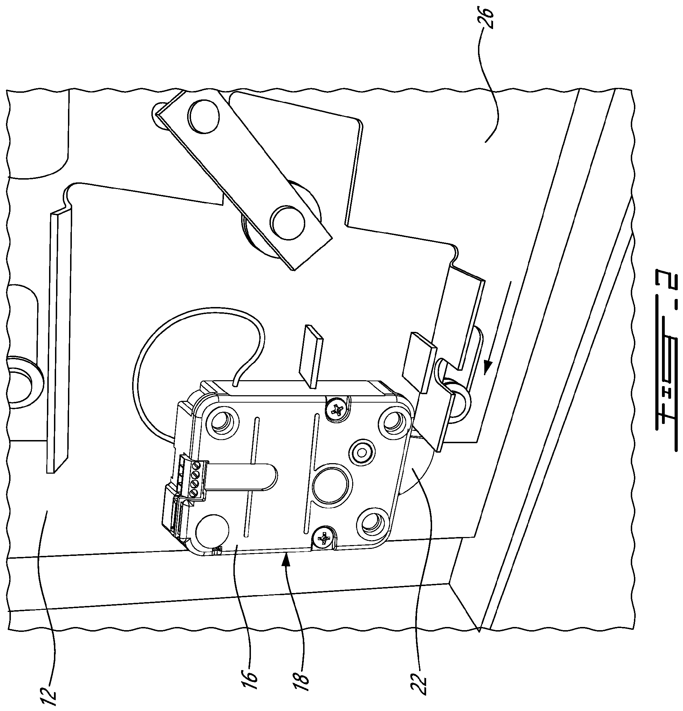

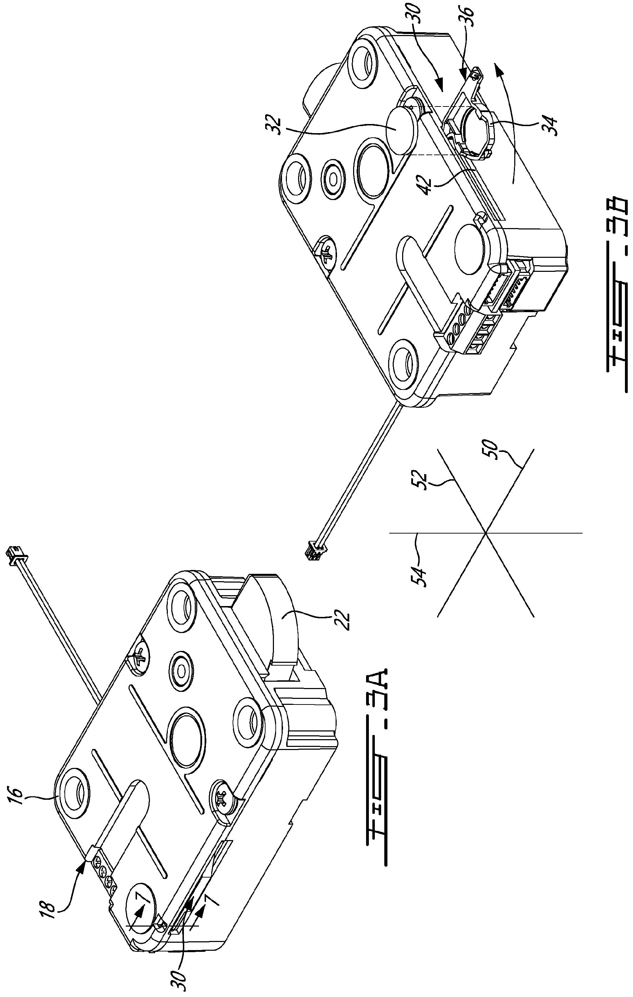

Fig. 2 shows an internal face of the door 12, bearing, in this embodiment, a housing 16 of an electronic lock 18. The electronic lock 18 can have a user interface. In this embodiment, the user interface includes a keypad 20 accessible to a user, attached to an external face of the door 12 of the safe, and seen in Fig. 1. The electronic lock 18 can have a housing 16, a locking member 22 (e.g., latch bolt, deadbolt) and electronics. In this embodiment, the housing 16 is disposed on the internal face of the door 12. The housing 16 is shown in greater detail in Figs. 3A and 3B.

In this specific embodiment, the housing 16 is fastened to the internal face of the door 12. The housing 16 is electrically connected to the keypad 20 through a cable that transmits the credentials, which can be here in the form of a string of numerical or alphanumerical characters, referred to as a combination or combo, from the keypad 20 to a controller of the electronic lock 18, which can be housed in the housing 16. If the combo is correct and access is deemed to be authorized, the controller moves internal components in a manner that the locking member 20 no longer blocks the opening of the door 12. Then, when the user turns a handle 24 accessible from the outside of the door 12, boltworks 26, embodied here as sheet metal parts provided on the inside of the door 12 and seen in Fig. 2, can be moved out from interference with a mating female feature (not shown) provided as part of the chamber 14 of the safe, allowing to open the door 12. It will be understood that various alternate embodiments of electronic locks 18 are possible. For instance, depending on the embodiment, the selective operation can be entirely electronically controlled, such as via an actuator which directly pulls or pushes a bolt or boltworks 26, or partially electronically controlled, such as via an actuator which toggles an intermediary member between a position where manual activation of the locking member 22 is blocked or unblocked. In still further embodiments, the control of the opening and closing of the door 12 can be entirely mechanically controlled, and electronics, such as a controller, of the electronic lock may only be provided for advanced functionalities such as record keeping or time-controlled activation rather than control of a locking member 22. Moreover, it will be understood that electronic locks may be associated to other pieces of hardware than safes, such as being integrated to doors controlling access to premises for instance, and the illustrated embodiment is presented solely for the sake of providing details of one possible example.

In some embodiments, the electronic lock 18 may include a battery as an internal power source for one or more electronic functionality of the electronic lock. While it may be desired for the battery to last as long as reasonable, it may be necessary to change the battery occasionally. It may be desired, in some embodiments, for the action of changing the battery to be performed in a convenient manner. To this end, a battery replacement mechanism may be provided. The battery replacement mechanism may include both a battery holder and a battery receptor bearing electrical contacts. It may be desired for the battery replacement mechanism to be of low cost, to be reliable, and to be convenient. It can also be desired for the battery replacement mechanism to have a relatively small volume, so as to minimize its "footprint" in the larger housing 16 of the electronic lock 18. The battery can be a coin cell battery, and the replacement mechanism can be referred to as an engagement mechanism 30. In an alternate embodiment, a similar engagement mechanism 30 may be used for the selective engagement and disengagement of an other type of electronic device such as a 1-wire device for instance. Disk-shaped devices such as coin cell batteries and Dallas keys which may be compatible with the engagement mechanism 30 may be referred to as disk devices 32. An engagement mechanism 30 may be used in association with other electronic devices than electronic locks 18.

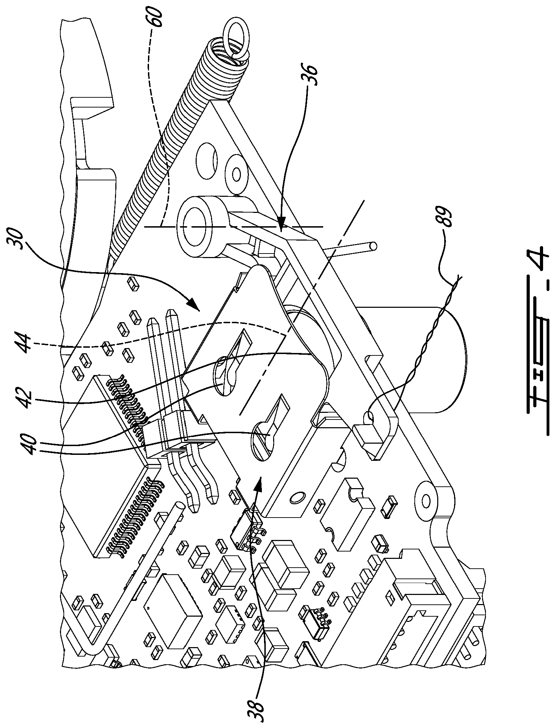

Fig. 3B shows an example of an engagement mechanism 30 in an exposed configuration, allowing to selectively remove or insert a disk device 32 such as the coin cell battery into a support 34 of a holder 36. Fig. 3A shows the engagement mechanism 30 in the engaged configuration, where the disk device 32 is nested within a cavity of a receptor 38, and connected to electrical contacts 40 provided as part of the receptor 38. Fig. 4 presents a view where the housing 16 is absent and where the engagement mechanism 30, including the receptor 38 and the holder 36, is shown more clearly, provided here in the engaged configuration. It will be understood that it is more specifically the support 34 of the holder 36 which is movable into and out from the cavity delimited by the receptor 38, via an entrance opening 42 of the receptor 38, whereas the holder 36 may have additional elements than the support 34.

In this embodiment, the receptor 38 is of the linear or translational engagement type. In other words, it is adapted to receive a support 34 of the disk device 32 along a linear engagement path 44. An example of a linear engagement path 44 is the engagement path along which a drawer is moved into and out from a receptor, for instance. To this end, the receptor 38 can have one or more guides 46, 48 defining the linear engagement path 44 for the support 34, and the linear engagement path 38 can lead across the entrance opening 42 into its cavity, where the electrical contacts 40 are located.

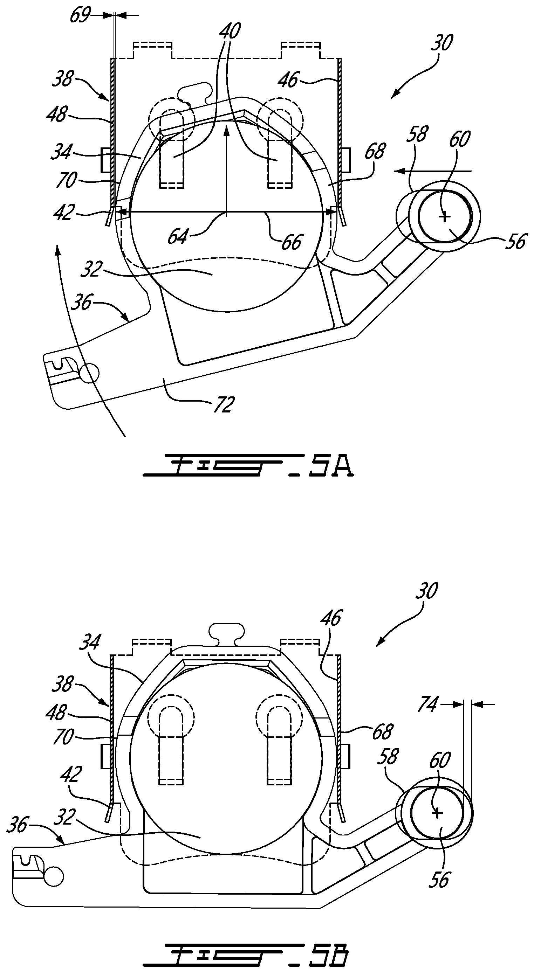

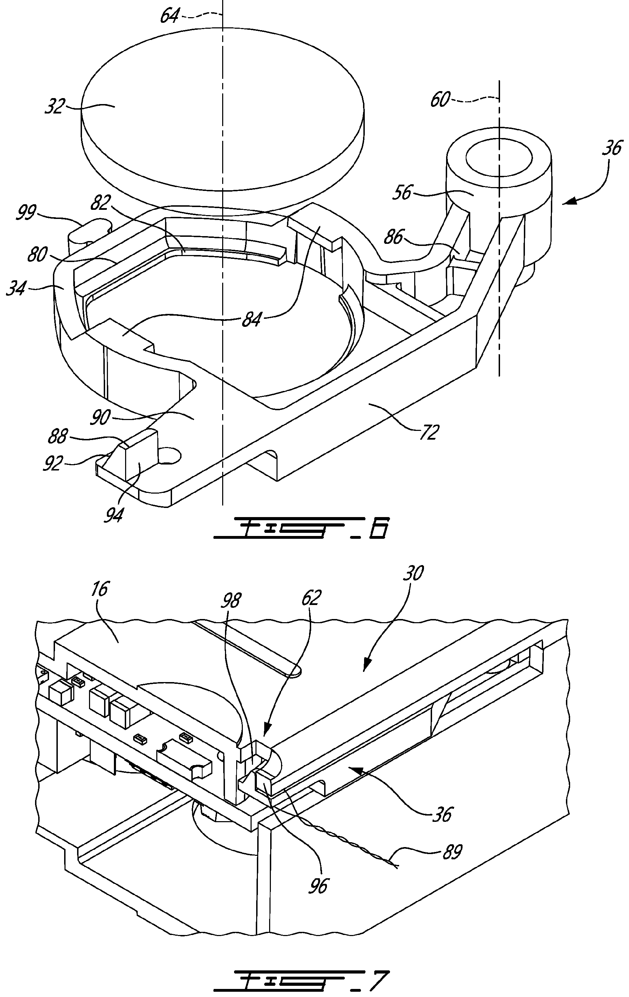

In some embodiments, the receptor 38 can have two guides 46, 48, best seen in Fig. 5A, which can arbitrarily be referred to as the first guide 46 and the second guide 48 for instance. In this example, the guides 46, 48 are in the form of walls and can be referred to as guide walls. The two guides 46, 48 can be said to be oriented in the orientation of the length of the linear engagement path, which will be referred to herein as the longitudinal orientation 50. The guides 46, 48 can be said to be spaced-apart in the transversal orientation 52, each delimiting a corresponding transversal side of the cavity. Typically, the receptor 38 will also have walls spaced apart from one another in the orthogonal orientation 54, normal to both the longitudinal orientation 50 and transversal orientation 52, and these walls may be referred to as the top wall and the bottom wall for simplicity, even though they may be oriented otherwise than upwardly and downwardly in an actual device. The guides 46, 48 can be used to provide mechanical guidance to the support when the holder 36 is moved from the exposed configuration to the engaged configuration. For instance, the guides 46, 48 can constrain the transversal position of the support 34, and hence of the disk device 32, relative the receptor 38, and hence relative the electrical contacts 40, when the holder 36 is in the engaged configuration. This can allow to ensure reliable electrical connectivity between the electrical contacts 40 and the disk device 32 when in the engaged configuration. In the illustrated example, the receptor 38 has a transversal width, which may be defined between two guides 46, 48, for instance, and each guide 46, 48 may constitute a corresponding transversal guide. In such a latter embodiment, the support 34 may be constrained between the two guides 46, 48 in the transversal orientation 52, and also constrained in the orthogonal orientation 54 between the top wall and bottom wall of the receptor 38. A top wall or a bottom wall of the receptor 38 may bear the electrical contacts 40 for instance. In the linear orientation, the support 34 may be longitudinally constrained when in the engaged configuration via a snapping engagement feature 62, an example of which will be presented further below in relation with Fig. 7, though in alternate embodiments, the support 34 may be constrained differently.

As best seen in Fig. 5A, in some embodiments, the holder 36 can have a pivot 56 held, by a structure of the holder 36, at a given, fixed, orientation and position relative the support 34. A guide slot 58 may also be provided, held in a fixed position and orientation relative the receptor 38. The guide slot 58 may be disposed adjacent the entrance opening 42 of the cavity, and be transversally-oriented. The pivot 56 can be engaged with the guide slot 58 in a manner to allow the holder 36 to pivot around a pivot axis 60 of the pivot 56, while allowing the pivot 56 to translate, along the transversal orientation 52, within the guide slot 58. The pivot axis 60 can be in the orthogonal orientation 54. This combined sliding and pivoting motion can be referred to herein as the sliding pivot motion for short, and can allow the support 34 to move linearly along the linear engagement path 44 of the receptor 38 while rotating around a disk axis 64 of the disk device 32, which can allow to limit the transversal width, or footprint, of the receptor 38.

The sliding pivot motion via which the support 34 may be moved into the engaged configuration with the receptor 38 is shown in greater detail in Figs. 5A through 5D. As can be understood, when the support 34 is in the exposed configuration such as shown in Fig. 3B, the pivot 56 can be free to translate and pivot within the slot 58, during which time a disk device 32 can be removed, inserted, or replaced within the support 34 and the holder 36 remains tethered to the guide slot 58. Fig. 5A shows a first key moment of the process of engaging the support 34, with the loaded disk device 32, into the engaged configuration where the disk device 32 will become engaged with the electrical contacts 40. More specifically, Fig. 5A presents a point along the engagement path 44 where the maximum width 66 of the support 34 reaches the entrance opening 42 of the receptor 38. If the transversal width of the receptor 38 is equal to the maximum width 66 of the support 34, this point along the engagement path 44 may only be possible for a specific transversal position of the pivot 56 in the guide slot 58. If the transversal width of the receptor 38 is slightly larger than the maximum width 66 of the support 34, there will be a slight amount of play in the transversal position of the pivot 56 in the guide slot 58, but this play may still be limited and shorter than the transversal travel distance otherwise possible along the guide slot 58. In the configuration shown in Fig. 5A, a first curved surface 68 of the support 34 can be engaged or be proximate to the first guide 46, at a first transversal side, and a second curved surface 70 of the support 34 can be proximate to the second guide 48, at the other, opposite transversal side. The curved surfaces 68, 70 can generally or roughly correspond to arcs of a circle centered on the disk axis 64 of the disk device 32, for instance.

From the point along the engagement path shown in Fig. 5A, the support 34 can be moved into the point shown in Fig. 5B, which corresponds to the engaged configuration. This movement can be performed via a combination of translational and rotational movement of the pivot 56 in the guide slot 58. More specifically, the holder 36 can be pushed longitudinally from a proximal side 72, towards a distal end of the cavity. During this movement, which can be driven by a pivoting moment on the holder 36, the first curved surface 68, corresponding roughly to a third quadrant of the support 34, can be driven against and slid against the first guide 46. If the width of the cavity is greater than the maximum dimension (diameter) 66 of the support 34, a spacing 68 may remain present between the second curved surface 70 and the second guide 48, on the transversal side of the receptor 38 which is remote from the guide slot 58. This spacing 68 can correspond to the amount of play. The support 34, and the disk device 32, can rotate (here in the clockwise direction) and translate along the linear engagement path 44, and the sliding engagement between the first curved surface 68 and the first guide 46 can have the effect of pivoting the pivot 56 around the disk axis 64, moving the pivot 56 within the guide slot 58, towards the entrance opening 42 of the receptor 38. Once the support 34, with the disk device 32 loaded thereon, reaches the engagement position shown in Fig. 5B, the pivot 56 can thus be at a second position along the guide slot 58, which is different from the first position shown in Fig. 5A by a translation distance 74.

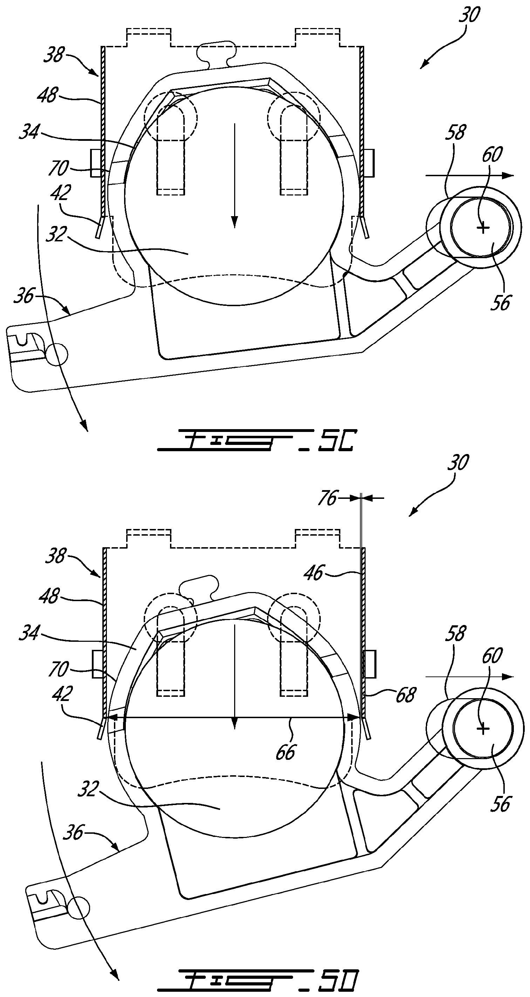

When retracting the support 34 from the engagement position, which can be initiated by a pivoting moment of the holder 36 around the pivot 56, the opposite can happen, as shown in Figs. 5C and 5D respectively. More specifically, the second curved surface 70, corresponding roughly to a first quadrant of the support, can be driven against and slid against the second guide 48. If the width of the cavity is greater than the maximum diameter of the support, a spacing 76 may remain present between the first curved surface 68 and the first guide 46, on the transversal side of the receptor 38 which is proximate to the guide slot 58. The support 34, and the disk device 32, can rotate (here in the counter-clockwise direction) and translate along the linear engagement path 44, and the sliding engagement between the second curved surface 70 and the second guide 48 can have the effect of pivoting the pivot 56 around the disk axis 64 and moving the pivot 56 within the guide slot 58, away the entrance opening 42 of the receptor 38, to a third position which may correspond to the first position shown in Fig. 5A or be spaced-apart from the first position by a distance corresponding to any amount of play between the width of the cavity and the maximum diameter 66 of the support 34, for instance.

Of course, in some embodiments, the user may manipulate the holder 56 carefully and either engage, disengage, or both engage and disengage the support 34 without touching the guides 46, 48, and in still other embodiments, a single guide may be provided instead of two guide walls, or guides may be omitted. Indeed, the example receptor 38 shown clearly in Fig. 4 is but one possible example of a receptor 38, and other makes and models of receptors may be used instead, in other embodiments. The above detailed description is provided solely for the sake of providing a detailed explanation of some possible embodiments.

The holder 56 of the embodiment presented above is shown alone, with the disk device 32 exploded, in Fig. 6. The disk device 32 can have a disk axis 64 coinciding with a disk geometry (e.g., cylindrical geometry) of the disk device 32. The support 34 of the holder 36 can be operable to trap the disk device 32 in a fixed position and orientation relative the holder 36, when the disk device 32 is engaged with the support 34, while allowing to selectively engage or disengage the disk device 32 with the support 34. To this end, a socket 80 can be defined in the support 34. In this embodiment, the socket 80 can include a periphery of the support 34, a supporting ledge 82 forming a first axial delimitation, and two diametrically opposite holding ledges 84 forming a second axial delimitation. The socket 80 can be so shaped that minor pressure may need to be applied by the user to resiliently deform the socket 80 to allow introduction or retraction of the disk device 32 from the socket 80. The support 34 can be flat and have a geometry which is generally circularly shaped around the disk axis 64 when the disk device 32 is engaged with the socket 80 of the support 34. The holder 36 can further have an arm extending between the support 34 and the pivot 56. This arm can be referred to as the pivot arm 86, and can bear the pivot 56 at an end thereof.

In some embodiments, it can be desired for the engagement mechanism 30 to have a snapping engagement 62 of some form, via which the holder 36 will become biased to the engaged configuration once it reaches the engaged configuration, and thus not easily move back out from the receptor 38 when it has been positioned, but where the snapping engagement 62 can be released via a specific application of force by the user, to allow the disengagement when it is wilful.

In some embodiments, such snapping engagement 62 can be provided by means of a catch 88 provided at an end of a second arm, protruding from the support opposite the pivot arm 86. The second arm can be referred to as the fastener arm 90. Both the fastener arm 90 and the pivot arm 86 can be connected to a proximal side 72 of the support 34, and in some embodiments, an engagement between guides 46, 48 of the receptor 38 and the fastener arm 90 and the pivot arm 86 may serve as stops to limit the longitudinal movement of the support 34 into the cavity. The catch 88 can have a tapered face 92 in one movement direction, and a normal face 94 in the opposite movement direction, and the fastener arm 90 can be somewhat resilient in the orthogonal orientation, normal to the movement direction of the catch 88. This resilience can be achieved by using a somewhat elastic material and providing the fastener arm 90 flat in a plane coinciding with the movement of the holder 36. An edge 96 can be provided at a fixed position and orientation relative the receptor 38, such as by being integrated to a housing 16 of an electronic device housing the engagement mechanism 30 (an example of which is shown in Fig. 7), and operable to come into engagement with the catch 88 when the holder 36 is moved into the engaged position. When a first face of the edge 96 comes into contact with the tapered face 92 of the catch 88, the edge 96 can push the catch 88 in an orthogonal direction, the resilient fastener arm 90 can yield, allowing to move the catch 88 under the edge 96, and pop back up behind the edge 96, at which point the engagement between the normal face 94 of the catch 88 and the rear face of the edge 96 can prevent undesired retraction of the catch 88 from the edge 96.

In the embodiment presented in Fig. 7, the edge 96 is positioned adjacent an unblocking opening 98 via which a user may wilfully apply a force against the tapered face 92 of the catch 88, such as with a pointy object, and push the catch back under the edge 96, releasing the holder 36 from the snapping engagement. Alternately, a wire or the like may be attached to the fastener arm 90, and remain exposed outside the housing 16, to allow a user to retract the catch 88 and disengage the snapping engagement 62 by pulling the wire, for instance.

In the embodiment presented in Fig. 6, the holder 36 can be injection-moulded. In some embodiments, injection-moulding can be convenient for various reasons, but may pose certain limits to the geometry of the support for various reasons, such as facilitating demoulding or promoting a good mixture of the plastic material when it is moulded. Some features may be present to facilitate moulding and/or to optimize the structure of the support 34. In the embodiment presented in Fig. 6, a protrusion 99 can be provided at the distal side of the support 34. The protrusion may have not other function than to allow a good mixture of the plastic material during moulding, when the plastic material is injected from the proximal side 72, for instance, and to avoid brittleness at the distal side. Such details can widely differ from one embodiment to another based on the preference of the designer.

In the specific embodiment shown in Figs. 3A to 4, the engagement mechanism 30 is integrated to the housing 16 of an electronic lock. The engagement mechanism 30 can be integrated to the electronic lock as a battery replacement mechanism for a coin cell battery. Indeed, the battery replacement mechanism may be configured in a manner for the battery to be positionable in an engaged configuration, in which it can be reliably placed into contact with electrical contacts 44 integrated to the receptor 38, connecting the battery to the rest of the circuit. In the engaged configuration the battery may not be accessible to the user. The battery replacement mechanism can be configured in a manner for the support 34 to be positionable in an exposed configuration, in which it is removed from the receptor to provide the user access to the battery. In the exposed configuration, the battery may be physically accessed by the user, removed from the holder 36, and replaced by another battery, for instance.

Fig. 4 presents an close-up view of the battery replacement mechanism in the engaged configuration, including the receptor 38 seen here mounted to a printed circuit board (PCB), and the holder 36 which can be seen to be pivotally mounted within a guide slot. The guide slot can include two cooperating slot members, which can be referred to herein as the lower slot member and the upper slot member for ease of reference, although they may be embodied in different orientations in an actual device. The lower slot member can be integrated to the printed circuit board. The upper slot member can be integrated to the housing 16 of the electronic lock.

There are various reasons for which a receptor having one or more transversal guides which are longitudinally oriented and which have a limited transversal dimension may be desired. In some embodiments, this may be desired to limit the volume of the battery replacement mechanism within the housing 16 of the electronic lock. In some embodiments, this may be desired simply to allow use of an off-the-shelf, low cost, reliable receptor for the battery replacement mechanism instead of having to design and manufacture a custom-made receptor, for instance. In some embodiments, this may be desired to reduce the extent to which the space inside the housing 16 needs to be clear of components for the holder 36. In some embodiments, this can be desired to allow the battery to travel down a relatively narrow path, using less space than a purely pivotal path would. In some embodiments, this can allow some tolerance or deviation on the location of the electrical contacts 44 for the battery with respect to the holder 36. In some embodiments, a holder 36 having sliding pivot connection can be preferred to a sliding tray since the sliding pivot connection can prevent the user from losing the holder, the holder 36 remaining tethered to the electronic lock when in the exposed configuration.

For instance, in the illustrated example, the receptor 38 can be an off-the-shelf, low cost and high reliability housing which also bears the electrical contacts 44. The off-the-shelf receptor 38 may be configured for use with a linear engagement path rather than a pivoting engagement path. Such an off-the-shelf housing may be incompatible with a purely pivoting type battery holder 36. For instance, the limited transversal width may not allow to accommodate a purely pivoting motion. The sliding pivot engagement of the battery holder 36 can adapt a holder 36 able to pivot with such a sliding/linear type battery housing.

In some embodiments, the battery may be used to provide constant power to a real time clock which is integrated to the electronics of the electronic lock. The real time clock can be used for the controller to always know what time it is, even if the main power supply fails, for instance. The time information can be used by one or more functions of the electronic lock such as record keeping or scheduled operation, to name some examples.

As can be understood, the examples described above and illustrated are intended to be exemplary only. The scope is indicated by the appended claims.

## Claims

1. An engagement mechanism for a disk device, the engagement mechanism comprising:
a receptor having an entrance opening, a cavity extending longitudinally from the entrance opening between a first guide wall and a second guide wall, and electrical contacts in the cavity;
a guide slot held in a fixed position and orientation relative the receptor, adjacent the entrance opening, the guide slot extending transversally; and
a holder having a support operable to receive the disk device and a pivot engaged with the guide slot, the pivot operable to slide transversally along the guide slot, and to rotate within the guide slot, the support being selectively movable, via said sliding and rotating of the pivot in the guide slot, across the entrance opening, between an engaged configuration in which the support is inside the cavity with the disk device connected to the electrical contacts, and an exposed configuration in which the support is outside the cavity while remaining tethered to the receptor via the pivot and guide slot engagement.

2. The engagement mechanism of claim 1 wherein the disk device has a disk axis, the support is operable to trap the disk device in the orientation of the disk axis, and the pivot has a pivot axis parallel to disk axis.

3. The engagement mechanism of claim 2 wherein the support is flat and generally circularly shaped around the disk device.

4. The engagement mechanism of claim 1, further comprising a pivot arm protruding from the support to an end, wherein the pivot is provided at the end of the pivot arm.

5. The engagement mechanism of claim 4, further comprising a fastener arm protruding from the support opposite the pivot arm, the fastener arm bearing a catch.

6. The engagement mechanism of claim 5 wherein the receptor and guide slot are made integral to a housing, the housing having an edge, wherein the catch is operable to flex and snappingly engage with the edge when the holder is moved to the engaged configuration.

7. The engagement mechanism of claim 5 wherein the pivot arm and the fastener arm protrude from a proximal portion of the support, further comprising a moulding protrusion protruding from a distal portion of the support, opposite the proximal portion.

8. The engagement mechanism of claim 5 wherein the fastener arm is flat in a longitudinally and transversally oriented plane.

9. An electronic lock having a movable bolt, a clock, a computer controlling the opening and closing of the movable bolt based on authentication of a user input, a coin cell battery powering the clock, and the engagement mechanism of claim 1; wherein the engagement mechanism is a replacement mechanism for the coin cell battery.

10. A method of engaging a disk device with electrical contacts, the method comprising:
positioning the disk device in a support of a holder when the holder is in an exposed configuration;
moving the holder with the supported disk device from the exposed configuration to an engaged configuration, including engaging the support with an entrance opening of a receptor and moving the support longitudinally across the entrance opening, into a cavity of the receptor, while simultaneously pivoting the holder and sliding the holder, until the disk device in the support is engaged with the electrical contacts.

11. The method of claim 10 wherein said moving the support longitudinally includes a longitudinally-oriented guide wall delimiting a transversal side of the cavity guiding the longitudinal movement of the support.

12. The method of claim 11 wherein said guiding the longitudinal movement of the support includes the longitudinally-oriented guide wall sliding against a first curved surface of the support on a first side of the disk device.

13. The method of claim 10 wherein said simultaneously pivoting and sliding the holder includes guiding a pivot of the holder in a transversally-oriented linear slot located transversally adjacent the entrance opening, and moving the pivot towards the entrance opening.

14. The method of claim 10 wherein said moving the holder further includes snappingly engaging the holder into the engaged configuration, and said moving the support longitudinally is further performed until the holder is snappingly engaged in the engaged configuration.

15. The method of claim 10 further comprising moving the holder from the engaged configuration to the exposed configuration, including moving the support longitudinally across the entrance opening, out from the cavity while simultaneously pivoting the holder relative a pivot engaged with a slot and sliding the pivot transversally away from the entrance opening within the slot, until the disk device in the support is fully exposed outside the cavity.
